(19) **Europäisches Patentamt**

**European Patent Office**

**Office européen des brevets**

(11) **EP 1 719 805 A1**

(12) **EUROPEAN PATENT APPLICATION**
published in accordance with Art. 158(3) EPC

(43) Date of publication:
08.11.2006 Bulletin 2006/45

(21) Application number: 05710720.3

(22) Date of filing: 25.02.2005

(51) Int Cl.:
*C08L 101/00* (2006.01)    *B05D 7/24* (2006.01)
*C08K 3/20* (2006.01)    *C08K 5/00* (2006.01)
*C08K 5/5415* (2006.01)    *C09D 5/00* (2006.01)
*C09D 5/02* (2006.01)    *C09D 7/12* (2006.01)
*C09D 183/02* (2006.01)    *C09D 201/00* (2006.01)

(86) International application number:
**PCT/JP2005/003170**

(87) International publication number:
**WO 2005/083006 (09.09.2005 Gazette 2005/36)**

(84) Designated Contracting States:
**DE**

(30) Priority: **27.02.2004 JP 2004054383**

(71) Applicant: **MITSUBISHI CHEMICAL
CORPORATION
Tokyo 108-0014 (JP)**

(72) Inventors:
• **TANAKA, Seiichiro, Mitsubishi Chemical Corp.
Yokohama-shi, Kanagawa 227-8502 (JP)**

• **UMEMOTO, Tomokazu, Mitsubishi Chemical
Corp.
Yokohama-shi, Kanagawa 227-8502 (JP)**
• **KOBAYASHI, Hiroshi, Mitsubishi Chemical Corp.
Kitakyushu-shi, Fukuoka 8060004 (JP)**
• **SAWAI, Takeshi, Mitsubishi Chemical
Corporation
Tokyo 108-0014 (JP)**

(74) Representative: **Vossius & Partner
Siebertstrasse 4
81675 München (DE)**

(54) **SILICON-CONTAINING LIQUID COMPOSITION**

(57)    There is provided a coating composition capable of improving performance of coated films, such as dirt shedding property and weathering resistance, only by applying directly onto the surface of various structures such as building structures and civil engineering structures or on a previous coating film without requiring formation of any undercoat. A silicon-containing liquid composition having a water concentration of 50% by weight or more and a light transmittance of 70% or more, wherein the silicon-containing liquid composition is a composition capable of forming a film on a substrate having a water contact angle of 60° or more.

**EP 1 719 805 A1**

**Description**

Technical Field

The present invention relates to a liquid composition suitably used for forming a coated film capable of preventing surfaces of building structures, civil engineering structures, industrial equipments, traffic signs, and the like from being contaminated with dirt or oily substances, or readily removing contaminants attached thereto by falling rain, wiping, or the like.

Background Art

In recent years, great importance is placed on an appearance of building structures, civil engineering structures, etc., and the surface of such structures has been finish-coated with various low-staining paints in order to enhance an dirt shedding property thereof. As low-staining finish-coating methods, high weather-resistant organic paints such as fluororesin-based paints, acrylic silicone-based paints and urethane-based paints have been hitherto used to form a finish coat.
Also, recently, addition of a small amount of an alkyl silicate to these paints to impart a hydrophilic property to the surface of the resulting coated film has been used, thereby preventing various contaminants such as dirt and oily substances from being attached thereto, and allowing these contaminants, if attached, to be readily washed off by falling rain or the like. Furthermore, inorganic paints composed mainly of organopolysiloxanes have been positively developed and partly put in practical use, in which these inorganic paints are generally excellent in weather resistance, durability, chemical resistance, heat resistance, and the like as compared to the organic paints.

However, in the case where these organic or inorganic paints are used to form a finish coat, there are commonly required time-consuming additional steps for forming an undercoat and, if necessary, an intermediate coat between the structure or the like and the finish coat in order to further enhance the adhesiveness between the structure or the like and the finish coat. In particular, the coated film made of the organic paints tends to be readily contaminated with influences of sand and dust, metal powder, falling rain (acidic rain etc.), or exhaust gases, resulting in deteriorated appearance of the structure.

Also, the paints for top coat which are prepared by adding a small amount of an alkyl silicate to the organic paints, tend to suffer from increase in its viscosity during storage and also problems on physical properties of a coated film, such as crack formation. Therefore, care must be taken upon handling and application thereof. Also, the inorganic paints involve a problem on storage stability similarly to the organic paints containing a small amount of an alkyl silicate, and many of the inorganic paints further require an additional heat-curing step. Furthermore, cracks tend to occur when the paints are thickly applied. Thus, handling and application thereof currently involve various problems.

In addition, these paints are classified into dangerous substances under the Japanese Fire Protection Law because they contain a large amount of volatile organic solvents. Therefore, great care must be needed for safe handling thereof. Thus, at present, with regard to the conventional paints for top coat, it has been desired to improve storage stability and performance of coated films as well as workability, safety, and environmental load at coating.
Furthermore, there has been also proposed a method of imparting a low-staining property by applying a hydrolysate of an organosilicate to make a surface of the coated film hydrophilic (see, e.g., Patent Document 1), but there arises a problem of easy occurrence of repelling on an organic coated film since the solvent component is water/alcohol-based one and the concentration of $SiO_2$ contained is low.

As a countermeasure to the repelling, addition of a surface tension regulator or the like has been proposed but actually, the repelling cannot be sufficiently prevented. Furthermore, when the surface tension depressant is added in a large amount in order to prevent the repelling, a contact angle between the coated film and water increases and a dirt shedding property becomes hardly exhibited. Patent Document 1: JP-A-2000-327996

Disclosure of the Invention

Problems that the Invention is to Solve

An object of the present invention is to provide a coating composition capable of forming a hydrophilic coated film without occurrence of repelling, regardless of the presence of a previous coated film.

Means for Solving the Problems

As a result of extensive studies in consideration of the above problems, the present inventors have found that a silicon-containing liquid composition having the following composition affords a coated film rich in dirt shedding property and capable of ready removal of contaminants even when attached. Thus, they have accomplished the present invention. Namely, the invention lies on a silicon-containing liquid composition having a water concentration of 50% by weight or more and a light transmittance of 70% or more, wherein the silicon-containing liquid composition is a composition capable of forming a film on a substrate having a water contact angle of 60° or more. Moreover, it lies on a silicon-containing liquid composition, which comprises the following components (A) to (E) and wherein the concentration of the component (A) is 6% by weight or less calculated as $SiO_2$ and the concentration of the component (C) is 50% by weight or more:

Component (A): an organosilicate or an oligomer thereof, 100 parts by weight calculated as $SiO_2$,
Component (B): a catalyst for hydrolysis and condensation, 0.1 to 10 parts by weight,
Component (C): water, 100 to 50000 parts by weight,
Component (D): an organic solvent, 100 to 50000 parts by weight, and
Component (E): an aqueous resin component, 10 to 1000 parts by weight as a solid matter.

Effect of the Invention

According to the invention, it is possible to form a coated film which is hydrophilic and excellent in dirt shedding property, weathering resistance, and the like, regardless of the presence of a previous coated film on a surface of a structure.

Best Mode for Carrying Out the Invention

The following will explain the present invention in detail.
The silicon-containing liquid composition according to the invention is a silicon-containing liquid composition having a water concentration of 50% by weight or more and a light transmittance of 70% or more. Furthermore, the silicon-containing liquid composition is a composition capable of forming a film on a substrate having a water contact angle of 60° or more.
Moreover, the silicon-containing liquid composition according to the invention is not particularly limited as far as it satisfies the above performance and, for example, is a composition containing components (A) to (E) to be described below as essential components. If necessary, thereto can be mixed a component (F) and the like. Composition (A);
The component (A) is an organosilicate or an oligomer thereof (hereinafter sometimes generically referred to as organosilicate), i.e., a compound containing an organic group bonded to a silicon atom through an oxygen atom. As the organosilicate, there may be mentioned an organoxysilane containing four organic groups each bonded to one silicon atom through an oxygen atom, and an organoxysiloxane wherein silicon atoms constitute a siloxane main chain ((Si-O)n).

The organic groups bonded to a silicon atom through an oxygen atom are not particularly limited, and may include, for example, linear, branched or cyclic alkyl groups. Specific examples thereof may include methyl, ethyl, n-propyl, i-propyl, n-butyl, i-butyl, t-butyl, n-pentyl, i-pentyl, neopentyl, hexyl, octyl or the like. Particularly, alkyl groups having 1 to 4 carbon atoms are suitable. As the other organic groups, there may be mentioned aryl groups such as phenyl, xylyl, and naphthyl groups. The component (A) may contain two or more different kinds of organic groups.

The alkyl group bonded to a silicon atom through an oxygen atom is preferably a methyl group and/or an ethyl group, most preferably a methyl group from the viewpoints of solubility in the case of the silicon-containing liquid composition according to the invention as well as a dert shedding performance of the resultant coated film.
When the alkyl group is an alkyl group having more than four carbon atoms, owing to low solubility, a large amount of organic solvents is required in order to form the liquid composition of the present invention, and thus there arise problems upon handling that the composition is classified into dangerous substances under the Japanese Fire Protection Law. In addition, the alkyl groups having more than four carbon atoms shows a poor hydrolyzability, so that production of SiOH groups in the resultant coated film becomes too slowly when exposed to outside environments and hence a dert shedding performance tends to be poorly exhibited.

Examples of the organoxysilanes may include tetramethoxysilane, tetraethoxysilane, tetrapropoxysilane, tetrabutoxysilane, tetraphenoxysilane, dimethoxydiethoxysilane or the like. Examples of the organoxysiloxanes may include hydrolyzed condensates of the above organoxysilanes. The condensation degree is not particularly restricted, and as a preferred range, a formula showing the condensation degree is represented by the following formula:

$SiO_x(OR)_y$

wherein $0 \leq x \leq 1.2$, $1.6 \leq y \leq 4$, and $2x+y=4$; and R is an organic group, preferably an alkyl group having 1 to 4 carbon atoms. The factor x represents the condensation degree of the siloxane. When the siloxane shows a molecular weight distribution, the factor x means an average condensation degree. The case where x=0 represents an organoxysilane as a monomer, and the case where 0<x<2 corresponds to an oligomer which is a condensate obtained by partial hydrolysis and condensation. Also, the case where x=2, corresponds to $SiO_2$ (silica). The condensation degree x of the organosilicate used in the invention is preferably in the range of 0 to 1.2, more preferably 0 to 1.0. The siloxane main chain may be a linear, branched or cyclic one or a mixture thereof.

An organosilicate wherein x is more than 1.2 has a high condensation degree and a high molecular weight and, therefore, a high viscosity and hence tends to be readily gelled upon storage, resulting in poor storage stability. Thus, it is difficult to use. Moreover, since the organosilicate exhibits a poor solubility in organic solvents, a large amount of organic solvents are required to prepare the silicon-containing liquid composition according to the invention. Therefore, the resultant composition tends to involve various handling problems since the composition containing a large amount of organic solvents is classified into dangerous substances under the Japanese Fire Protection Law.

The above formula: $SiO_x(OR)_y$ may be determined by the following method. The condensation degree x can be readily obtained by Si-NMR measurement. Specifically, assuming that a chemical shift value of tetramethylsilane as a standard substance is 0 ppm, the organosilicate affords 5 groups of peaks between -75 to -120 ppm as its chemical shift value, which are referred to as Q0, Q1, Q2, Q3 and Q4, respectively. The respective peaks are based on the number of siloxane bonds constituted by silicon atoms. The peak Q0 corresponds to a monomer having no siloxane bond; Q1 corresponds to a compound having one siloxane bond; Q2 corresponds to a compound having two siloxane bonds; Q3 corresponds to a compound having three siloxane bonds; and Q4 corresponds to a compound having four siloxane bonds. After area ratios of these peaks are determined, the condensation degree x is determined by calculation according to the following formula:

$$x=A×0+B×0.5+C×1.0+D×1.5+E×2$$

wherein A, B, C, D and E are area ratios of Q0, Q1, Q2, Q3 and Q4, respectively, with the proviso that A+B+C+D+E=1. In the case of silica ($SiO_2$), x is 2. The factor y in the above formula is determined by the following equation: 2x+y=4. Meanwhile, in the case where the organosilicate contains two or more different kinds of organic groups, the amounts of the respective organic groups bonded can be readily determined by H-NMR or $^{13}$C-NMR measurement. In this case, a method capable of readily identifying the chemical shift may be suitably selected.

Specific examples of the preferred organosilicates used in the invention may include tetramethoxysilane, tetraethoxysilane, tetra-n-propoxysilane, tetraisopropoxysilane, tetra-n-butoxysilane, tetraisobutoxysilane, tetra-sec-butoxysilane, tetra-t-butoxysilane and/ partially hydrolyzed condensates thereof. Also, any combination of two or more thereof may be used. Among these organosilicates, tetramethoxysilane and partially hydrolyzed condensates thereof are preferred for the following reasons. That is, the tetramethoxysilane and partially hydrolyzed condensates thereof show a high reactivity for hydrolysis and, therefore, can readily produce silanol groups. As a result, only a small amount of an organic solvent is required to prepare a homogeneous liquid composition. Also, the high dirt shedding liquid composition which is not classified into dangerous substances can be readily prepared therefrom.

In the organosilicates, each organic group is bonded to a silicon atom through an oxygen atom. The silicon-containing liquid composition according to the invention may contain other organosilicon compounds than the organosilicates, for example, silicon compounds having an organic group directly bonded to a silicon atom. As such compounds, there may be exemplified various silane coupling agents or the like. Specific examples thereof may include trialkoxysilane compounds such as methyltrimethoxysilane, methyltriethoxysilane, methyltripropoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, butyltrimethoxysilane, butyltriethoxysilane, pentyltrimethoxysilane, pentyltriethoxysilane, hexyltrimethoxysilane, hexyltriethoxysilane, phenyltrimethoxysilane, phenyltriethoxysilane, phenyltripropoxysilane, phenyltriisopropoxysilane, benzyltrimethoxysilane, benzyltriethoxysilane, 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane, 3-methacryloxypropyltrimethoxysilane, 3-methacryloxypropyltriethoxysilane, vinyltrimethoxysilane, vinyltriethoxysilane, 3-mercaptopropyltrimethoxysilane, 3-mercaptopropyltriethoxysilane, 3-aminopropyltriethoxysilane, N-(2-aminoethyl)-3-aminopropyltrimethoxysilane and 3-ureidopropyltriethoxysilane, and partially hydrolyzed condensates thereof.

Moreover, there may be mentioned dialkoxysilane compounds such as dimethyldimethoxysilane, dimethyldiethoxysilane, diethyldimethoxysilane, diethyldiethoxysilane, diphenyldimethoxysilane, diphenyldiethoxysilane, 3-glycidoxypropylmethyldimethoxysilane, 3-methacryloxypropylmethyldimethoxysilane, 3-mercaptopropylmethyldimethoxysilane, 3-aminopropylmethyldimethoxysilane and N-(2-aminoethyl)-3-aminopropylmethyldimethoxysilane, and partially hydrolyzed condensates thereof.

Furthermore, there may be mentioned chlorosilane compounds such as methyltrichlorosilane, vinyltrichlorosilane, phenyltrichlorosilane, methyldichlorosilane, dimethyldichlorosilane, dimethylchlorosilane, methylvinyldichlorosilane, 3-chloropropylmethyldichlorosilane, diphenyldichlorosilane and methylphenyldichlorosilane, and partially hydrolyzed condensates thereof.

In addition, there may be mentioned 3-mercaptopropyltrimethoxysilane, 3-mercaptopropylmethyldimethoxysilane, 3-mercaptopropyltriethoxysilane, 3-mercaptopropylmethyldiethoxysilane, 3-aminopropyltrimethoxysilane, 3-aminopropyltriethoxysilane, N-3-trimethoxysilylpropyl-m-phenylenediamine, N,N-bis[3-(methyldimethoxysilyl)propyl]ethylenediamine, N,N-bis[3-(trimethoxysilyl)propyl]ethylenediamine, N-(2-aminoethyl)-3-aminopropylmethyldimethoxysilane, N-(2-aminoethyl)-3-aminopropyltrimethoxysilane, P-[N-(2-aminoethyl)aminomethyl]phenethyltrimethoxysilane, and the like.

In the case that the silicon-containing liquid composition according to the invention may contain these organosilicon compounds, the amount thereof is usually 50 parts by weight or less, preferably 30 parts by weight or less, more preferably 20 parts by weight or less calculated as Si based on 100 parts by weight (calculated as $SiO_2$) of the organosilicate which is the component (A). These organosilicon compounds contain a less amount of hydrolyzable functional groups as compared to those of the organosilicates and, therefore, are remarkably deteriorated in contribution to prevention of staining in a coated film. In this regard, a silicon compound containing a halogen element tends to generate cumbersome substances such as hydrochloric acid, and hence is undesirable from an environmental viewpoint. Therefore, the amount of the silicon compound may be 20 parts by weight or less, preferably 10 parts by weight or less calculated as Si, based on 100 parts by weight (calculated as $SiO_2$) of the organosilicate.

Component (B);

The component (B) is a catalyst for hydrolysis and condensation and may be one having an activity for hydrolysis and condensation of the organosilicate. Specifically, there may be mentioned inorganic acids such as hydrochloric acid, sulfuric acid, nitric acid and phosphoric acid; organic acids such as acetic acid, benzenesulfonic acid, toluenesulfonic acid, xylenesulfonic acid, ethylbenzenesulfonic acid, benzoic acid, phthalic acid, maleic acid, formic acid and oxalic acid; basic compounds such as sodium hydroxide, potassium hydroxide, calcium hydroxide, ammonia and organic amine compounds; organometallic compounds or metal alkoxide compounds other than the organosilicates, e.g., organotin compounds such as dibutyl tin dilaurate, dibutyl tin dioctoate and dibutyl tin diacetate; organoaluminum compounds such as aluminum tris(acetylacetonate), aluminum monoacetylacetonate bis(ethylacetoacetate), aluminum tris(ethylacetoacetate) and ethylacetoacetate aluminum diisopropylate; organotitanium compounds such as titanium tetrakis(acetylacetonate), titanium bis(butoxy)-bis(acetylacetonate) and titanium tetra-n-butoxide; and organozirconium compounds such as zirconium tetrakis(acetylacetonate), zirconium bis(butoxy)-bis(acetylacetonate), zirconium (isopropoxy)-bis(acetylacetonate) and zirconium tetra-n-butoxide; boron compounds such as boron tri-n-butoxide and boric acid; and the like.

These catalysts may be used in combination of any two or more thereof. In the case where the silicon-containing liquid composition according to the invention is applied onto building structures, civil engineering structures, industrial equipments, transportation equipments, traffic signs, and the like, organometallic chelate compounds or metal alkoxide compounds are preferably used from the viewpoint of preventing the substrate from being corroded by the catalyst.
The amount of the catalyst to be added is preferably 0.1 to 10 parts by weight, more preferably 0.5. to 5 parts by weight, based on 100 parts by weight (calculated as $SiO_2$) of the organosilicate. When the amount of the catalyst is less than 0.1 part by weight, the silicon-containing liquid composition is deteriorated in storage stability, and the coating film produced from the composition fails to exhibit a dert shedding performance. From the viewpoint of storage stability and exibition of desired performance of the coated film, it is sufficient to add the catalyst in an amount of 0.1 to 10 parts by weight, and it not necessary to add the catalyst excessively in an amount of more than 10 parts by weight. The catalyst may be added by any method, and it may be added as a solution prepared by dissolving the catalyst in the organosilicate beforehand, or as a solution prepared by dissolving the catalyst in water or a solvent. The catalyst may be usually readily dissolved by mere mixing with organosilicate, water or the solvent at room temperature. If the catalyst is difficult to dissolve, the mixture may be heated.

Component (C);

The amount of water as the component (C) to be blended is from 100 to 50,000 parts by weight, preferably 500 to 25,000 parts by weight based on 100 parts by weight (calculated as $SiO_2$) of the organosilicate. This means that the water is generally added in a considerably excessive amount as compared to its stoichiometric amount capable of hydrolyzing organoxy groups of the organosilicate. It is considered that the addition of such an excessive amount of water allows silanol groups produced by hydrolysis of the organosilicate to coexist with a large amount of water, thereby preventing the condensation reaction of the silanol groups and, therefore, enhancing the storage stability of the resultant hydrolyzed liquid. In addition, the ratio of an organic solvent to be blended such as an alcohol can be reduced. Furthermore, the flash point can be elevated by increasing water content to 50% by weight or more based on the total weight, thereby making the resultant composition non-dangerous.

When the amount of water added is less than 100 parts by weight based on 100 parts by weight (calculated as $SiO_2$) of the organosilicate, the Si content in the resultant silicon-containing liquid composition becomes too high, so that the composition tends to be readily gelled, resulting in poor storage stability and low dirt shedding effect on the coated film. Contrarily, when the amount is more than 50,000 parts by weight, the Si content in the resultant silicon-containing liquid composition is too low and a film-forming property tends to decrease to occur repelling, so that it is difficult to form a coated film excellent in a dert shedding performance.

The water used in the invention is not particularly limited and a tap water may be used but deionized water or ultrapure water may be sometimes desired according to applications of the silicon-containing liquid composition. For example, in the case where an object to be coated is soft steel, copper, aluminum, or the like which is readily corroded by acids or in the case where the composition is used for electric or electronic material applications which require formation of heat-resistant coats, moisture-proof coats, chemical-resistant coats, anti-barrier coats, insulating coats, or the like, desalted water may be preferably used. Furthermore, in the case where inclusion of impurities is not desired, e.g., in the case of semiconductors or the like, ultrapure water may be preferably used.

Component (D);

The solvent as the component (D) is not particularly limited as far as it affords a homogeneous liquid composition. In general, there may be usually used water-soluble organic solvents, for example, alcohols and glycol derivatives, but esters, ketones, ethers or the like may be used. Hydrocarbons may be used in combination with other organic solvents provided that the amount of the hydrocarbons is small. Examples of the alcohols may include lower alkyl alcohols such as methanol, ethanol, n-propanol, isopropanol, n-butanol, and isobutanol, and lower alkylene glycols such as ethylene glycol, 1,2-propylene glycol, 1,3-propylene glycol, and 1,4-butanediol.

Examples of the glycol derivatives may include ethylene glycol monomethyl ether, ethylene glycol monoethyl ether, propylene glycol monomethyl ether, propylene glycol monoethyl ether, diethylene glycol monomethyl ether, diethylene glycol monoethyl ether, ethylene glycol monomethyl ether acetate, ethylene glycol monoethyl ether acetate, propylene glycol monomethyl ether acetate, propylene glycol monoethyl ether acetate, or the like.

As the hydrocarbons, benzene, toluene, xylene, kerosene, n-hexane, or the like may be used, for example. As the esters, methyl acetate, ethyl acetate, propyl acetate, butyl acetate, methyl acetoacetate, ethyl acetoacetate, butyl acetoacetate, or the like may be used, for example. As the ketones, acetone, methyl ethyl ketone, methyl isobutyl ketone, acetyl acetone, or the like may be used, for example. As the ethers, ethyl ether, butyl ether, methoxyethanol, ethoxyethanol, dioxane, furan, tetrahydrofuran, or the like may be used, for example. Of these solvents, alcohols, especially monohydric alcohols having 1 to 3 carbon atoms, such as methanol, ethanol, and isopropanol, or glycol derivatives such as propylene glycol monomethyl ether and diethylene glycol monoethyl ether, are preferred because they can be handled easily and can exhibit a good storage stability in the case of forming a silicon-containing liquid composition according to the invention and also a good dirt shedding performance of the resultant coated film.

The amount of the solvent to be blended is in the range of 100 to 50,000 parts by weight, preferably 200 to 10,000 parts by weight based on 100 parts by weight (calculated as $SiO_2$) of the organosilicate. When the amount of the solvent is less than 100 parts by weight, based on 100 parts by weight (calculated as $SiO_2$) of the organosilicate, it may be difficult to homogeneously dissolve the organosilicate, the catalyst and water together. When the amount is more than 50,000 parts by weight, the Si content in the resultant silicon-containing liquid composition is too low and thus a film-forming property is deteriorated, so that it becomes difficult to form a coated film excellent in dirt shedding performance. In addition, it is probable that the resultant composition is classified into a dangerous substance under the Japanese Fire Protection Law. Meanwhile, as the solvent of the component (D), the alcohol produced by hydrolysis of the organosilicate is also included.

Component (E);

The component (E) is an aqueous resin component. Specifically, there may be mentioned water-dispersible resins, i.e., aqueous emulsions, water-soluble resins, and the like.

As the aqueous emulsions, there may be mentioned (meth)acrylic resin-based emulsions, styrene-acrylic resin-based emulsions, acrylic silicon resin-based emulsions, fluororesin-based emulsions, urethane resin-based emulsions, urethane-acrylic resin-based emulsions, and the like. Moreover, as the water-soluble resins, there may be mentioned polyvinyl alcohol (PVA), ethylene-vinyl alcohol copolymer resin (EvOH), polyethylene oxide, polyvinyl acetal, water-soluble acrylic resins, and the like.

As the (meth)acrylic resin-based emulsions, there may be mentioned homopolymer emulsions and copolymer emulsions of (meth)acrylic monomers, copolymer emulsions of (meth)acrylic monomers and other monomers copolymerizable therewith, and the like.

The (meth)acrylic monomers mean acrylic acid, methacrylic acid, and ester compounds thereof, and there may be mentioned (meth)acrylic acid alkyl esters, (meth)acrylic ester having a cycloalkyl group, (meth)acrylic acid alkoxyalkyl esters, crosslinkable (meth)acrylic acid esters, and the like. They may be used in combination of two or more thereof.

As the (meth)acrylic acid alkyl esters, there may be mentioned methyl (meth)acrylate, ethyl (meth)acrylate, butyl (meth)acrylate, 2-ethylhexyl (meth)acrylate, benzyl (meth)acrylate, lauryl (meth)acrylate, stearyl (meth)acrylate, and the like.

As the (meth)acrylic ester having a cycloalkyl group, there may be mentioned cyclohexyl (meth)acrylate, isobornyl (meth)acrylate, and the like.

As the (meth)acrylic acid alkoxyalkyl esters, there may be mentioned 2-methoxyethyl (meth)acrylate, 2-ethoxyethyl (meth)acrylate, 2-butoxyethyl (meth)acrylate, and the like.

As the crosslinkable (meth)acrylic acid esters, there may be mentioned allyl (meth)acrylate, ethylene glycol di(meth)acrylate, propylene glycol di(meth)acrylate, trimethylolpropane tri(meth)acrylate, and the like.

In this regard, the "(meth)acryl" herein means "acryl or methacryl".

As the other monomers copolymerizable with the (meth)acrylic monomers, there may be mentioned aromatic hydrocarbon-based vinyl monomers such as styrene, methylstyrene, chlorostyrene, and vinyltoluene; $\alpha,\beta$-ethylenically unsaturated carboxylic acids such as maleic acid, itaconic acid, crotonic acid, fumalic acid, and citraconic acid and acid anhydrides thereof; sulfonic acid-containing vinyl monomers such as styrenesulfonic acid and vinylsulfonic acid; chlorine-containing unsaturated compounds such as vinyl chloride, vinylidene chloride, and chloroprene; hydroxyl group-containing alkyl vinyl ethers such as hydroxyethyl vinyl ether and hydroxypropyl vinyl ether; alkylene glycol monoallyl ethers such as ethylene glycol monoallyl ether, propylene glycol monoallyl ether, and diethylene glycol monoallyl ether; $\alpha$-olefins such as ethylene, propylene, and isobutylene; vinyl esters such as vinyl acetate, vinyl propionate, vinyl butyrate, and vinyl pivalate; vinyl ethers such as methyl vinyl ether, ethyl vinyl ether, butyl vinyl ether, and cyclohexyl vinyl ether; allyl ethers such as ethyl allyl ether and butyl allyl ether; and the like.

As the acrylic silicon resin-based emulsions, there may be mentioned homopolymer emulsions and copolymer emulsions of silicon-containing acrylic monomers, copolymer emulsions of silicon-containing acrylic monomers and other monomers copolymerizable therewith, and the like.

As the silicon-containing acrylic monomers, there may be mentioned hydrolyzable silyl group-containing vinylic monomers such as $\gamma$-(meth)acryloxypropyltrimethoxysilane, $\gamma$-(meth)acryloxypropyltriethoxysilane, $\gamma$-(meth)acryloxypropylmethyldimethoxysilane, and $\gamma$-(meth)acryloxypropylmethyldiethoxysilane, and the like.

As the other monomers copolymerizable with the silicon-containing acrylic monomers, the monomers exemplified as usable in the above acrylic resin-based emulsions can be used.

As the fluororesin-based emulsions, there may be mentioned homopolymer emulsions and copolymer emulsions of fluorine-containing monomers, copolymer emulsions of fluorine-containing monomers and other monomers copolymerizable therewith, and the like.

As the fluorine-containing monomers, there may be mentioned fluoroolefins such as vinylidene fluoride, trifluoroethylene, tetrafluoroethylene, pentafluoroethylene and hexafluoropropylene; fluorine-containing (meth)acrylates such as trifluoroethyl (meth)acrylate, pentafluoropropyl (meth)acrylate, and perfluorocyclohexyl (meth)acrylate; and the like.

The urethane resin-based emulsion is a generic term of an emulsion which affords a urethane bond in a coated film formed with the silicon-containing liquid composition according to the invention. The emulsion may be one already having a urethane bond in the liquid composition or one forming a urethane crosslinkage by a reaction after coated film formation.

Specifically, there may be mentioned emulsions obtained by a method of copolymerizing a polymerizable monomer having a urethane bond with other copolymerizable monomer, a method of polymerizing a polymerizable unsaturated monomer in the presence of an aqueous resin having a urethane bond, a method of mixing an aqueous urethane resin having a reactive group with an emulsion containing a group capable of reacting the reactive group, or the like.

As commercially available water-dispersible resins, there may be mentioned acrylic resin-based emulsions such as Aquabrid 903, Aquabrid TT-103, Aquabrid CS-175, and Aquabrid 4790, and urethane-acrylic resin-based emulsions such as Aquabrid 950. Of these, acrylic resin-based ones are more preferred than urethane resin-based ones, and particularly, Aquabrid CS-175 and Aquabrid 4790 are preferred.

In the urethane resin-based emulsion, when an alcohol is present in a certain amount or more in the system, a precipitate may sometimes form.

The commercially available water-dispersible resin usually contains a film forming aid but the component (E) may or may not contain the film forming aid. In this regard, the film forming aid has the following function. Namely, the water-dispersible resin forms a continuous film during the process of drying. However, when a minimum film-forming temperature (MFT) of the water-dispersible resin is a temperature for coating operation or higher, the water-dispersible resin cannot form a continuous film owing to insufficient film formation. In order to enable film formation at a low temperature region, it is necessary to lower Tg of a base resin to regulate MFT to a low temperature region but, in the case where a highly hard film property is required, it is necessary to use a base resin having a high Tg. In such a case, an aimed film can be formed by adding a volatile organic compound as a film forming aid even when a base resin having a high Tg is used.

Moreover, since the water-dispersible resin composition uses water as a medium, it freezes at a low temperature (0°C or lower) region. In a cold district, since long-term storage and coating operations at a temperature of 0°C or lower are performed, a method of intentionally adding a low-volatile organic compound such as ethylene glycol or propylene glycol for the purpose of preventing freezing and improving freezing-melting stability in a low temperature region is commonly used. As the film forming aid to be used for such a purpose, a high-boiling and low-volatile one is preferred.

For example, there may be mentioned ethyl carbitol, butyl carbitol, butyl carbitol acetate, ethyl cellosolve, butyl cellosolve, butyl cellosolve acetate, benzyl acetate, 2,2,4-trimethyl-1,3-pentanediol monoisobutyrate (trade name: Texanol CS-12 manufactured by Chisso Corporation), glycols such as ethylene glycol, diethylene glycol, propylene glycol, and hexylene glycol, and benzyl alcohol.

As the water-soluble resin as the component (E), there may be mentioned polyvinyl alcohol, polyethylene oxide, ethylene-vinyl alcohol, polyvinyl acetal, and the like. Specifically, there may be mentioned Soarnol D2908, Gohsefimer Z, Gohsenol N, Gohsenol A, and Gohsenol G manufactured by Nippon Synthetic Chemical Industry Co., Ltd., S-LEC KX-5 and S-LEX KW-10 manufactured by Sekisui Chemical Co., Ltd., and the like.

The silicon-containing liquid composition according to the invention is a homogeneous solution and is usually not gelled. Moreover, the light transmittance is 70% or more. In this regard, the light transmittance is measured as follows. Transmittance is measured at a wavelength of 550 nm with packing a sample in a quartz cell of 1 cm using a U-1000 type Hitachi ratio beam spectrophotometer. At this time, the resulting value is corrected, the transmittance with distilled water being regarded as 100%.

The silicon-containing liquid composition according to the invention is characterized in that the coated film obtained by applying it has a low straining property. In the case that an exposure test is performed in accordance with a JIS Z2381 direct exposure test method for three months, a low-staining transparent coated film having a change in whiteness ($\Delta$L) of 5 or less, further 4 or less can be formed.

In this regard, an exposure angle at the exposure test in the invention is 60° from a horizontal plane. Moreover, the measuring method of the change in whiteness ($\Delta$L) is as follows. As a measuring apparatus, a color checker NR-1 manufactured by Nippon Denshoku is used. After calibration is performed using a standard white board (Calibration Board manufactured by Nippon Denshoku C/2° X=85.32, Y=87.08, Z=99.35D65/10° X=82.50, Y=87.07, Z=90.17), an L value of the coated film before the actual exposure test is measured to determine a brightness difference (L0) from the standard white board. Then, after the exposure test, the L value is again measured to determine a brightness difference (L) from the standard white board and $\Delta L = |L_0 - L|$ is calculated.

The silicon-containing liquid composition according to the invention forms a hydrophilic coated film. The hydrophilicity of the coated film can be represented by a water contact angle as an index. In the case that a water drop is placed on a surface of the coated film, the water contact angle means a contact angle between the water drop and the coated film.

In general, when the contact angle between the coated film and water is 60° or more, in case that rainwater flows a surface of the coated film, rainwater flows only specific places, the whole coated film is hardly washed, rain line stains tend to be attached, and hence it is difficult to consider that the coated film exhibits a low-staining property. The silicon-containing liquid composition according to the invention can easily form a coated film having a water contact angle of 60° or less and it is also easy to form a coated film having a water contact angle of 50° or less by regulating the composition. Moreover, the coated film obtained from the silicon-containing liquid composition according to the invention is usually colorless and transparent.

The silicon-containing liquid composition according to the invention can be produced by homogeneously mixing the aforementioned components (A), (B), (C), (D), and (E) within the compositional range of the invention. For example, using a suitable mixing vessel such as a mixing tank or a mixer, the components (A) to (E) may be sequentially charged and subjected to mixing operations such as stirring, rotation, and vibration to form a homogeneous silicon-containing liquid composition.

Incidentally, the hydrophilicity of the coated film formed from the liquid composition according to the invention is attributable to a silanol group and the coated film exhibits dirt shedding property owing to its hydrophilicity, so that the coated film is preferably in a form where many silanol groups are present from the beginning. To that end, the component (A) itself of the liquid composition preferably contains a large amount of silanol groups. Such a liquid composition can be obtained by mixing the components (A), (B), (C), and optionally (D) beforehand and subsequently heating them to accelerate hydrolysis and condensation of the component (A), followed by adding the component (E) to form a final composition. In this case, only a part of the components (C) and (D) may be added to the components (A) and (B) to perform the hydrolysis and condensation of the component (A) and then the remainder of the components (C) and (D) may be added thereto.

In one of preferred processes for producing the liquid composition of the invention, the components (A) to (D) are first mixed so that the concentration of the component (A) becomes from 2 to 6% by weight calculated as $SiO_2$ with leaving a part of the component (C) and component (D), and hydrolysis and condensation of the component (A) is effected. Subsequently, the remainder of the component (C) and component (D) are added to dilute the mixture two times by weight or more, and then the component (E) and the component (F) are further added to form a desired silicon-containing liquid composition.

To the silicon-containing liquid composition according to the invention, a surface tension depressant (hereinafter sometimes referred to as component (F)) may be also added. The surface tension depressant may include many kinds thereof when finely classified but may be roughly classified into four kinds, i.e., (1) acrylic one, (2) vinylic one, (3) silicone-based one, and (4) fluorinated one. In the invention, any of them are usable. The mixing amount of the component (F) may be sufficiently from 0.1 to 2% by weight, preferably from 0.3 to 1% by weight in the silicon-containing liquid composition. Among the kinds of the component (F), the silicone-based one and the fluorinated one generally have a strong surface tension-lowering ability and the acrylic and vinylic ones have an advantage that they exhibit very little problems such as re-coating ability and thus can be used for both of a top coat and an intermediate coat. As commercially available component (F), there may be mentioned Dapro W77, Dapro U-99, and Dapro W95HS manufactured by ELEMENTIS JAPAN, and the like.

To the silicon-containing liquid composition according to the invention, there may be added pigment dispersants, precipitation inhibitors, anti-sag agents, deglossing agents, reversible agents, antifoaming agents, adhesion modifiers, antiseptics, algaecides, bactericides, deodorants, ultraviolet light absorbers, and the like which are auxiliary agents to be added in conventional paints. The mixing amount of each of these additives is not particularly limited as far as an aimed effect of each additive is exhibited but the amount may be sufficiently from 0.01 to 10.0% by weight, preferably from 0.01 to 1.0% by weight in the silicon-containing liquid composition according to the invention.

A method for mixing the component (F) is not limited and it may be added to a silicon-containing liquid composition prepared by mixing all the components (A) to (E) or may be added to each of the components such as an alkyl silicate, water, or an organic solvent in which the component (F) tends to be dissolved or dispersed.

The concentration of the organosilicate in the silicon-containing liquid composition according to the invention is preferably 6% by weight or less, more preferably from 0.2 to 5% by weight calculated as $SiO_2$. In this regard, the lower limit of concentration of the organosilicate is 0.1% by weight calculated as $SiO_2$. When the concentration is less than the value, the low-staining property of the coated film to be formed therewith is hardly exhibited. Contrarily, the composition having an organosilicate concentration of more than 6% by weight is apt to be gelled during storage owing to its high concentration and thus the storage stability tends to be questioned.

In the silicon-containing liquid composition according to the invention, the concentration of the component (C) is 50% by weight or more, preferably 80% by weight or more, more preferably 90% by weight or more. This is because the content of the organic solvent is reduced to decrease the volatile component at coating and also the hydrolysis of the organosilicate is accelerated as far as possible to secure a sufficient amount of silanol groups at coated film formation and to maintain the surface of the coated film hydrophilic. When the surface of the coated film is hydrophilic, attached stains are apt to be washed off with rainfall and thus a self-washing property can be imparted to the surface. In this regard, since the amount of water consumed in the hydrolysis of the organosilicate is only minute, the charged amount of water as the component (C) is about the same as the amount of water in the silicon-containing liquid composition.

On the other hand, the concentration of the organic solvent as the component (D) is less than 50% by weight, preferably less than 20% by weight, more preferably less than 10% by weight.

With regard to the silicon-containing liquid composition according to the invention, the silicon concentration in the film when coated and dried is preferably from 40 to 90% by weight calculated as $SiO_2$. The concentration is more preferably from 45 to 85% by weight, particularly from 50 to 80% by weight. In this regard, the silicon concentration in a dry film is determined as follows.

$$\text{Silicon concentration in dry film (\%)} = \text{Amount of Si}$$
$$\text{in silicon-containing liquid composition calculated as } SiO_2$$
$$\text{(g)/(Amount of Si in silicon-containing liquid composition}$$
$$\text{calculated as } SiO_2 + \text{Amount of solid matter in component}$$
$$\text{(E) (g)} \times 100$$

In the case that the silicon concentration in the dry film is 90% or more, adhesion to a glass substrate is not particularly problematic but repelling on an organic coated film (e.g., on a conventional paint-coated film, on a resin substrate, etc.) is large and thus it becomes difficult to obtain a uniform coated film. On the other hand, when the concentration is less than 40%, coating ability is satisfactory but the concentration of hydrolytic condensates of the organosilicate, i.e., silica fine particles having a large amount of silanol groups is low and hence hydrophilicity is not exhibited.

The silicon-containing liquid composition according to the invention is excellent in storage stability. For example, the composition is not gelled even upon a storage stability test at 50°C for 40 days in a sealed state and can maintain initial coating performance when prepared.

The silicon-containing liquid composition according to the invention can be applied onto the surface of substrates such as building structures, civil engineering structures, industrial equipments, transportation equipments, and traffic signs regardless of the presence of a previous coated film. Particularly, the composition is characterized in that a film can be formed on a substrate having a water contact angle on the substrate surface of 60° or more, preferably on a substrate having a water contact angle of 70° or more, more preferably on a substrate having a water contact angle of 85° or more, even more preferably on a substrate having a water contact angle of 80° or more. The substrate is not particularly limited as far as the water contact angle is 60° or more but, for example, there may be mentioned organic substrates or substrates covered with an organic film.

In the invention, "capable of forming a film" means the following. That is, a coated film can be formed on a surface to be coated in an area ratio of 85% or more, the surface to be coated being coated by dipping operations of dipping a substrate having a width of 7 cm, a length of 15 cm, and a thickness of 2 mm under a liquid depth of up to 7 cm and lifting it up at a rate of 2 mm/second. In this regard, the dipping conditions are as follows: the substrate is coated in a lifting rate of 2 mm/second in a room set at a temperature of $25\pm10°C$ (a humidity of $65\pm30\%$) and then dried as it is at room temperature until a sticky feeling disappears.

As a coating process with the silicon-containing liquid composition according to the invention, there may be mentioned a method of applying it onto a surface of a substrate to form a coated film. As the applying method, a simple method such as spray-coating after aerosol formation may be used. Of course, it is also possible to apply it by various methods such as conventional brush-coating, rollercoating, spray-coating, and methods using a roll coater, a flow coater, or the like.

As the structures to be coated with the silicon-containing liquid composition according to the invention, there may be mentioned civil engineering structures such as tunnels, dams, bridges, tanks, and flues; building structures such as houses and buildings; cultural assets such as temples, shrines, stone statues, and ruins; transportation equipments such as automobiles, air planes, railway rolling stocks, and ships; industrial equipments; traffic signs; outdoor structures such as guard rails; or the like. In addition to the outdoor structures, wall surfaces of bath room and kitchen, outer surfaces of housings of furniture, refrigerators, televisions, or air conditioners, stainable locations such as window glass, or the like may be mentioned as objects to be coated.

Examples

The present invention will be described in more detail below with reference to Examples. Meanwhile, "%" represents "% by weight" unless otherwise specified.

(Preparation Example 1)

Using tetramethoxysilane (manufactured by Mitsubishi Chemical Corporation: hereinafter referred to as TMOS), components were mixed in the following mixing ratio and then hydrolysis and condensation was carried out upon heating for 4 hours in a reflux state.

| | |
|---|---|
| TMOS | 253.3 parts by weight |
| | (100 parts by weight calculated as $SiO_2$) |
| Catalyst for hydrolysis and condensation (5% methanol solution of acetylacetone aluminum) | 38.4 parts by weight |
| Ethanol | 1407.7 parts by weight |
| Ion-exchange water | 1657.6 parts by weight |

The content of silicon in the liquid calculated as $SiO_2$ is 3.0%.

The composition was diluted with the following aqueous ethanol solution to prepare a colorless transparent silicon-containing composition-1.

| | |
|---|---|
| Ion-exchange water | 5594.6 parts by weight |
| Ethanol | 3543.9 parts by weight |

In the liquid, the content of silicon calculated as $SiO_2$ is 0.8%, the concentration of methanol is 2.0%, the concentration of ethanol is 39.6%, and the water content is 57.6%.

Dangerous nature of the silicon-containing composition-1 was judged according to the testing method for dangerous substances prescribed under the Japanese Fire Protection Law (Government Ordinance for "Regulation of Dangerous Objects" Article 1, Section 3 through Article 1, Section 8; Ministerial Ordinance for "Tests and Properties of Dangerous Objects"). The alcohol content of the silicon-containing composition-1 was less than 60%. In addition, as a result of the measurements of a flash point (tag-closed type) and a burning point (tag-open type) conducted in Kita-Kyushu Laboratory of K.K. Mitsubishi Chemical Safety Science Research Institute, it was confirmed that the flash point was 26°C and the burning point was 29°C. Meanwhile, the flash point and burning point of 60% ethanol in water are 23°C and 23°C, respectively. As a result, it was recognized that the silicon-containing composition-1 did not classified into the dangerous substances prescribed under the Japanese Fire Protection Law.

Moreover, the light transmittance was measured to be 100%.

(Preparation Example 2)

Using TMOS, components were mixed in the following mixing ratio and then hydrolysis and condensation was carried out upon heating for 4 hours in a reflux state.

| | |
|---|---|
| TMOS | 253.3 parts by weight |
| | (100 parts by weight calculated as $SiO_2$) |
| Catalyst for hydrolysis and condensation (5% methanol solution of acetylacetone aluminum) | 38.4 parts by weight |
| Ethanol | 1407.7 parts by weight |
| Ion-exchange water | 1657.6 parts by weight |

The content of silicon in the liquid calculated as $SiO_2$ is 3.0%.

The composition was diluted with 9138.5 parts by weight of ion-exchange water to prepare a colorless transparent silicon-containing composition-2.

In the liquid, the content of silicon calculated as $SiO_2$ is 0.8%, the concentration of methanol is 2.0%, the concentration of ethanol is 11.3%, and the water content is 85.9%.

Moreover, the light transmittance was measured to be 100%.

(Preparation Example 3)

The silicon-containing composition-1 previously obtained and an acrylic silicon resin cationic emulsion "CS-175" manufactured by Daicel Chemical Industries, Ltd. were mixed in the following ratio to obtain a "silicon-containing liquid composition-A".

Silicon-containing composition-1

| | |
|---|---|
| | 1000 parts by weight |
| CS-175 | 2.7 parts by weight (as solid matter) |

The light transmittance of the silicon-containing liquid composition-A was 73.5%.

(Preparation Example 4)

The silicon-containing composition-2 previously obtained, an acrylic silicon resin cationic emulsion "CS-175" manufactured by Daicel Chemical Industries, Ltd., and a surface tension depressant "Dapro W77" manufactured by ELEMENTIS JAPAN were mixed in the following ratio to obtain a "silicon-containing liquid composition-B".

Silicon-containing composition-2

| | |
|---|---|
| | 1000 parts by weight |
| CS-175 | 2.7 parts by weight (as solid matter) |
| Dapro W77 | 5 parts by weight |

The light transmittance of the silicon-containing liquid composition-B was 73.5%.

(Preparation Example 5)

Using TMOS, components were mixed in the following mixing ratio and then hydrolysis and condensation was carried out upon heating for 4 hours in a reflux state.

| | |
|---|---|
| TMOS | 253.3 parts by weight |
| | (100 parts by weight calculated as $SiO_2$) |

(continued)

| Catalyst for hydrolysis and condensation (5% methanol solution of acetylacetone aluminum) | 38.4 parts by weight |
|---|---|
| Ion-exchange water | 4704.2 parts by weight |

The content of silicon in the liquid calculated as $SiO_2$ is 2.0%.

The composition was diluted with 7491.1 parts by weight of ion-exchange water to prepare a colorless transparent silicon-containing composition-5.

In the liquid, the content of silicon calculated as $SiO_2$ is 0.8%, the concentration of methanol is 2.0%, and the water content is 97.2%.

(Preparation Example 6)

The silicon-containing composition-5 previously obtained, an acrylic silicon resin cationic emulsion "CS-175" manufactured by Daicel Chemical Industries, Ltd., and a surface tension depressant "Dapro W77" manufactured by ELEMENTIS JAPAN were mixed in the following ratio to obtain a "silicon-containing liquid composition-C".

Silicon-containing composition-5

|  | 1000 parts by weight |
|---|---|
| CS-175 | 2.7 parts by weight (as solid matter) |
| Dapro W77 | 5 parts by weight |

The light transmittance of the silicon-containing liquid composition-C was 73.5%.

(Example 1)

About 350 ml of the silicon-containing liquid composition-A obtained in Preparation Example 3 was placed in a wide-mouth plastic vessel. The following substrate-0, substrate-1, substrate-2, and substrate-3 were dipped therein and lifted at a rate of 2 mm/sec. Thereafter, they were dried at room temperature for 24 hours to form a coated film on each substrate. All the substrates except the substrate-3 exhibited no repelling and were capable of being coated and about 100% of the surface of each substrate could be covered with the silicon-containing liquid composition, whereby a film could be formed. The contact angle between the coated film and water was 48° in the case of the substrate-0, 40° in the case of the substrate-1, and 45° in the case of the substrate-2. Meanwhile, a coated film was not formed on the substrate 3 owing to repelling and the area covered with the silicon-containing liquid composition was 20% or less, so that a film could not be formed. The ΔL in the exposure test was 1.6 in the case of the substrate-1 and 1.3 in the case of the substrate-2, which were very good. Moreover, a tape peeling test of the coated films in the case of the substrates 0, 1, and 2 afforded good results.

In this regard, the following were used as the substrates.

Substrate-0

A flame-ground glass (150×70×2 mm: JIS R3202) manufactured by Nippon Testpanel Co., Ltd. and thoroughly washed and defatted was used as the substrate-0.

The water contact angle of the substrate was measured to be 10° or less.

Substrate-1

A flame-ground glass (150×70×2 mm: JIS R3202) manufactured by Nippon Testpanel Co., Ltd. was thoroughly washed and defatted and then a double-stick tape "Nicetack" manufactured by NICHIBAN Co., Ltd. (width: 10 mm) including a release paper was doubly attached to both ends of long sides of the glass. The tape thickness was about 300 μm.

About 5 ml of an aqueous acrylic silicon paint "SK Compo Silicon (white)" manufactured by SK Kaken Co., Ltd. and diluted by adding water in an extra amount of 15% was placed on the glass and was applied by spreading it with a glass rod so as to be flat. The film thickness of a non-dried coated film was about 300 μm.

It was dried and hardened at room temperature for at least 7 days to obtain a substrate-1.

The water contact angle of the substrate-1 was measured to be 90°.

Substrate-2

In the preparation of the substrate-1, a substrate-2 was obtained by applying a solvent-based acrylic paint "SK Acryl Color (white)" manufactured by SK Kaken Co., Ltd. and diluted by adding toluene in an extra amount of 20% instead of "SK Compo Silicon (white)", followed by drying in a similar manner.

The water contact angle of the substrate-2 was measured to be 90°.

Substrate-3

In the preparation of the substrate-1, a substrate-3 was obtained by applying a solvent-based acrylic paint "Elastic Color Enamel (white)" manufactured by SK Kaken Co., Ltd. and diluted by adding toluene in an extra amount of 20% instead of "SK Compo Silicon (white)", followed by drying in a similar manner.

The water contact angle of the substrate-3 was measured to be 92°.

Moreover, the exposure test was performed by a direct exposure test method defined in JIS Z2381. Namely, as the aforementioned substrates 1 to 3, a commercially available white paint was applied onto a test piece (glass) having a size of thickness 2 mm × width 7 cm × length 15 mm to prepare a sufficiently dried substrate. Then, the silicon-containing liquid composition according to the invention was applied on the substrate and dried. The coated material was directly placed on an exposure table and change in whiteness (ΔL value) was traced with time. The exposure table was place on a position 932 mm apart from a mounting plane and the height of the nearest part to the mounting plane was at least 500 mm.

The exposure angle was 60° from a horizontal plane. The apparatus was mounted for three months on a rooftop of the building (five stories) of Research and Development Department in Kurosaki business institution of Mitsubishi Chemical Corporation, Shiroishi 1-1, Yahata Nishi-ku, Kita-kyushu-shi. The exposure table was placed on a place which was not affected by the shade and water drop falling.

For the measurement of change in whiteness (ΔL), a color checker NR-1 manufactured by Nippon Denshoku was used. After calibration was performed using a standard white board (Calibration Board manufactured by Nippon Denshoku C/2° X=85.32, Y=87.08, Z=99.35D65/10° X=82.50, Y=87.07, Z=90.17), an L value of the coated film before the actual exposure test was measured to determine a brightness difference (L0) from the standard white board. Then, after the exposure test, the L value was again measured to determine a brightness difference (L) from the standard white board and $\Delta L = |L_0 - L|$ was calculated.

A tape peeling test as an index of adhesiveness of the coated film was performed by attaching an adhesive cellophane tape in accordance with JIS Z1522 onto a surface of a coated film, tightly adhering the tape by rubbing it with a rubber eraser (JIS S6050), and, after 1 or 2 minutes, peeling it at a stroke in the vertical direction with holding one end of the tape. The peeled state of the coated film at this time was visually observed and one wherein no peeling was observed was considered to be good.

(Example 2)

About 350 ml of the silicon-containing liquid composition-B obtained in Preparation Example 4 was placed in a wide-mouth plastic vessel. The substrate-0, substrate-1, substrate-2, and substrate-3 were dipped therein and lifted at a rate of 2 mm/sec. Thereafter, they were dried at room temperature for 24 hours. About 100% of the surface of each substrate could be covered with the silicon-containing liquid composition, whereby a film could be formed. The water contact angle was 13° in the case of the substrate-0, 20° in the case of the substrate-1, 24° in the case of the substrate-2, and 30° in the case of the substrate-3. The ΔL in the exposure test was 1.6 in the case of the substrate-1, 1.1 in the case of the substrate-2, and 1.5 in the case of the substrate-3, which were very good. Moreover, the tape peeling test of the coated films afforded good results.

(Example 3)

About 350 ml of the silicon-containing liquid composition-C obtained in Preparation Example 6 was placed in a wide-mouth plastic vessel. The substrate-1, substrate-2, and substrate-3 were dipped therein and lifted at a rate of 2 mm/sec. Thereafter, they were dried at room temperature for 24 hours. In the cases of the substrates 1 and 2, about 100% of the surface of each substrate could be covered with the silicon-containing liquid composition, whereby a film could be formed. The water contact angle was 20° in the case of the substrate-1 and 20° in the case of the substrate-2. Meanwhile, a coated film was not formed on the substrate 3 owing to repelling and the area covered with the silicon-containing liquid composition was 20% or less, so that a film could not be formed. The ΔL in the exposure test was 3.2 in the case of the substrate-1 and 2.5 in the case of the substrate-2, which were very good. Moreover, the tape peeling test in the cases of the substrates 1 and 2 afforded good results.

(Example 4)

The silicon-containing liquid composition-B was placed in a glass vessel capable of being tightly sealed. Then, using the silicon-containing liquid composition-B, each of the substrate-0, substrate-1, substrate-2, and substrate-3 was coated by dipping and lifting as in Example 3. Thereafter, they were dried at room temperature for 24 hours. About 100% of the surface of each substrate could be covered with the silicon-containing liquid composition, whereby a film could be formed. The water contact angle was 15° in the case of the substrate-0, 18° in the case of the substrate-1, 20° in the case of the substrate-2, and 27° in the case of the substrate-3. The tape peeling test of the coated films afforded good results in all cases.

(Example 5)

The silicon-containing liquid composition-C was placed in a glass vessel capable of being tightly sealed. Then, using the silicon-containing liquid composition-C, each of the substrate-1, substrate-2, and substrate-3 was coated by dipping and lifting as in Example 3. Thereafter, they were dried at room temperature for 24 hours. In the cases of the substrates 1 and 2, about 100% of the surface of each substrate could be covered with the silicon-containing liquid composition, whereby a film could be formed. The water contact angle was 18° in the case of the substrate-1 and 17° in the case of the substrate-2. Meanwhile, a coated film was not formed on the substrate 3 owing to repelling and the area covered with the silicon-containing liquid composition was 20% or less, so that a film could not be formed. The tape peeling test in the cases of the substrates 1 and 2 afforded good results.

(Comparative Example 1)

About 350 ml of the silicon-containing liquid composition-1 obtained in Preparation Example 1 was placed in a wide-mouth plastic vessel. The substrate-1, substrate-2, and substrate-3 were dipped therein and lifted at a rate of 2 mm/sec. Thereafter, they were dried at room temperature for 24 hours. On all the substrates, a coated film was not formed owing to repelling and the area covered with the silicon-containing liquid composition was 20% or less, so that a film could not be formed.

(Comparative Example 2)

The substrate-1, substrate-2, and substrate-3 were subjected to the exposure test without any coating. The water contact angle was 90° in the case of the substrate-1, 90° in the case of the substrate-2, and 92° in the case of the substrate-3. The $\Delta$L in the exposure test was 8.2 in the case of the substrate-1, 9.2 in the case of the substrate-2, and 10 in the case of the substrate-3, which were results that stains were very conspicuous.

While the invention has been described in detail and with reference to specific examples thereof, it will be apparent to one skilled in the art that various changes and modifications can be made therein without departing from the spirit and scope thereof.

The present application is based on Japanese Patent Application No. 2004-54383 filed on February 27, 2004, and the contents are incorporated herein by reference.

Industrial Applicability

According to the present invention, it is possible to form a coated film which is hydrophilic and excellent in dirt shedding property, weather resistance, and the like on a surface of a structure, regardless of the presence of a previous coated film.

**Claims**

1. A silicon-containing liquid composition having a water concentration of 50% by weight or more and a light transmittance of 70% or more, wherein the silicon-containing liquid composition is a composition capable of forming a film on a substrate having a water contact angle of 60° or more.

2. The silicon-containing liquid composition according to claim 1, wherein the substrate is a substrate covered with an organic substrate or an organic film.

3. The silicon-containing liquid composition according to claim 1 or 2, which comprises the following components (A) to (E) and wherein the concentration of the component (A) is 6% by weight or less calculated as $SiO_2$ and the concentration of the component (C) is 50% by weight or more:

   Component (A): an organosilicate or an oligomer thereof, 100 parts by weight calculated as $SiO_2$,
   Component (B): a catalyst for hydrolysis and condensation, 0.1 to 10 parts by weight,
   Component (C): water, 100 to 50000 parts by weight,
   Component (D): an organic solvent, 100 to 50000 parts by weight, and
   Component (E): an aqueous resin component, 10 to 1000 parts by weight as a solid matter.

4. The silicon-containing liquid composition according to claim 1 or 2, which comprises the following components (A) to (E) and wherein the concentration of the component (A) is 6% by weight or less calculated as $SiO_2$ and the concentration of the component (C) is 50% by weight or more:

   Component (A): an organosilicate or an oligomer thereof, 100 parts by weight calculated as $SiO_2$,
   Component (B): a catalyst for hydrolysis and condensation, 0.5 to 5 parts by weight,
   Component (C): water, 500 to 25000 parts by weight,
   Component (D): an organic solvent, 200 to 10000 parts by weight, and
   Component (E): an aqueous resin component, 10 to 1000 parts by weight as a solid matter.

5. The silicon-containing liquid composition according to any one of claims 1 to 4, which contains a surface tension depressant as a component (F) in a concentration of 0.1 to 2.0% by weight.

6. The silicon-containing liquid composition according to any one of claims 1 to 5, wherein the component (E) is an aqueous emulsion.

7. The silicon-containing liquid composition according to claim 6, wherein the component (E) is an aqueous emulsion selected from (meth)acrylic resin-based, styrene-acrylic resin-based, acrylic silicon resin-based, fluororesin-based, urethane resin-based, and urethane-acrylic resin-based ones.

8. The silicon-containing liquid composition according to any one of claims 1 to 7, wherein the component (A) is methyl silicate or an oligomer thereof.

9. The silicon-containing liquid composition according to any one of claims 1 to 8, wherein the component (A) is represented by the following formula:

$$SiO_x (OR) _y$$

wherein $0 \leq x \leq 1.2$, $1.6 \leq y \leq 4$, and $2x+y=4$.

10. A silicon-containing liquid composition, which comprises the following components (A) to (E) and wherein the concentration of the component (A) is 6% by weight or less calculated as $SiO_2$ and the concentration of the component (C) is 50% by weight or more:

Component (A): an organosilicate or an oligomer thereof, 100 parts by weight calculated as $SiO_2$,
Component (B): a catalyst for hydrolysis and condensation, 0.1 to 10 parts by weight,
Component (C): water, 100 to 50000 parts by weight,
Component (D): an organic solvent, 100 to 50000 parts by weight, and
Component (E): an aqueous resin component, 10 to 1000 parts by weight as a solid matter.

11. A silicon-containing liquid composition, which comprises the following components (A) to (E) and wherein the concentration of the component (A) is 6% by weight or less calculated as $SiO_2$ and the concentration of the component (C) is 50% by weight or more:

Component (A): an organosilicate or an oligomer thereof, 100 parts by weight calculated as $SiO_2$,
Component (B): a catalyst for hydrolysis and condensation, 0.5 to 5 parts by weight,
Component (C): water, 500 to 25000 parts by weight,
Component (D): an organic solvent, 200 to 10000 parts by weight, and
Component (E): an aqueous resin component, 10 to 1000 parts by weight as a solid matter.

12. The silicon-containing liquid composition according to claim 10 or 11, which contains a surface tension depressant as a component (F) in a concentration of 0.1 to 2.0% by weight.

13. The silicon-containing liquid composition according to claim 10 or 11, wherein the component (A) is represented by the following formula:

$$SiO_x(OR)_y$$

wherein $0 \leq x \leq 1.2$, $1.6 \leq y \leq 4$, and $2x+y=4$.

14. A process for producing the silicon-containing liquid composition according to any one of claims 1 to 13, which comprises mixing components (A) to (D) so that the concentration of the component (A) becomes from 2 to 6% by weight calculated as $SiO_2$ to achieve hydrolysis and condensation of the component (A), subsequently adding the component (C) and/or the component (D) to dilute the mixture two times by weight or more, and adding a component (E) or a component (E) and a component (F) thereto.

15. A coating process which comprises applying the silicon-containing liquid composition according to any one of claims 1 to 13 onto a surface of a substrate and drying the composition to form a coated film.

16. A coated film formed by applying the silicon-containing liquid composition according to any one of claims 1 to 13 onto a substrate.

**17.** The coated film according to claim 16, which is colorless and transparent.

**18.** The coated film according to claim 16 or 17, wherein a water contact angle is 60° or less.

**19.** The coated film according to any one of claims 16 to 18, wherein change in whiteness ($\Delta$L) of the coated film subjected to an exposure test according to the following exposure test method is 5 or less, the exposure test method being as follows: an outdoor exposure test is performed for three months according to the JIS Z2381 direct exposure test method, provided that an exposure angle is 60° from a horizontal plane.

## INTERNATIONAL SEARCH REPORT

| | International application No. |
|---|---|
| | PCT/JP2005/003170 |

A. CLASSIFICATION OF SUBJECT MATTER
Int.Cl$^7$ C08L101/00, B05D7/24, C08K3/20, 5/00, 5/5415, C09D5/00, 5/02, 7/12, 183/02, 201/00

According to International Patent Classification (IPC) or to both national classification and IPC

B. FIELDS SEARCHED

Minimum documentation searched (classification system followed by classification symbols)
Int.Cl$^7$ C08L101/00, B05D7/24, C08K3/20, 5/00, 5/5415, C09D5/00, 5/02, 7/12, 183/02, 201/00

Documentation searched other than minimum documentation to the extent that such documents are included in the fields searched
| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-173642 A (Tama Kagaku Kogyo Kabushiki Kaisha), 21 June, 2002 (21.06.02), Claims; Par. Nos. [0024] to [0047] (Family: none) | 1-2,8-9, 15-19 |
| A | JP 2000-327996 A (Dainippon Shikizai Kogyo Kabushiki Kaisha), 28 November, 2000 (28.11.00), Claims (Family: none) | 1-19 |
| A | JP 10-202177 A (Kansai Paint Co., Ltd.), 04 August, 1998 (04.08.98), Claims (Family: none) | 1-19 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 May, 2005 (12.05.05) | 31 May, 2005 (31.05.05) |

| Name and mailing address of the ISA/ Japanese Patent Office | Authorized officer |
|---|---|
| Facsimile No. | Telephone No. |

Form PCT/ISA/210 (second sheet) (January 2004)

**17**

**INTERNATIONAL SEARCH REPORT**

| International application No. |
|---|
| PCT/JP2005/003170 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 9-183902 A  (Dow Corning Corp.),<br>15 July, 1997 (15.07.97),<br>Claims<br>& EP 780421 A2          & AU 9675472 A<br>& KR 97042845 A         & US 5807921 A | 1-19 |
| A | JP 7-136584 A  (Kansai Paint Co., Ltd.),<br>30 May, 1995 (30.05.95),<br>Claims<br>(Family: none) | 1-19 |

Form PCT/ISA/210 (continuation of second sheet) (January 2004)

**EP 1 719 805 A1**

## REFERENCES CITED IN THE DESCRIPTION

### Patent documents cited in the description

- JP 2000327996 A
- JP 2004054383 A